# EUROPEAN PATENT SPECIFICATION

(11) **EP 0 550 954 B1**
(45) Date of publication and mention of the grant of the patent: **29.05.1996**
(21) Application number: 92309715.8
(22) Date of filing: 23.10.1992
(51) Int. Cl.: B68G 7/05, A47C 7/18, B29C 63/22

(54) **Method for making fabric covered foam cushions utilizing a fabric bag**
Verfahren zur Herstellung von gewebebedeckten Schaumkissen unter Verwendung eines aus Gewebe gemachten Sacks
Procédé de fabrication de coussins en mousse recouverts de tissu utilisant un sac en matière tissée

(30) Priority: 10.01.1992 US 819065
(43) Date of publication of application: 14.07.1993
(73) Proprietor: LEAR SEATING CORPORATION, Southfield, Michigan 48034 (US)
(72) Inventor: Klems, William F., Troy, Michigan 48084 (US); Goscinski, Aloysius J., Northville, Michigan 48167 (US)
(74) Representative: Ben-Nathan, Laurence Albert

(56) References cited:
- DE-A- 2 622 725
- GB-A- 2 168 606
- US-A- 4 692 199
- US-A- 4 925 513

## Description

### 1. Technical Field

The subject invention relates to a method for making a fabric covered foam cushion utilizing a pre-formed foam pad enclosed within a fabric bag.

### 2. Description of the Related Art

Fabric covered foam articles and methods for making the same constitute a well-developed art in which a great deal of effort and expense have been directed. Fabric covered foam articles generated from this art generally comprise a foam pad adhesively secured to a fabric covering. An example of such a method is shown in U.S. Patent No. 4,692,199 issued September 8, 1989 to Kozlowski which represents the preambule of claims 1 and 2 and which discloses a particularly well adapted method for making a fabric covered foam article. The Kozlowski '199 patent specifically discloses a method wherein vacuum pressure is applied to a porous contoured mold in order to draw an impervious adhesive film against a cloth fabric layer to conform the cloth fabric layer to the contours of a mold surface. A matching cellular foam pad is placed in mating engagement with the adhesive film as it is held to the contour of a mold surface by the vacuum pressure. The foam pad is compressed against the mold by a perforated platen and held in place as the vacuum pressure is discontinued. Steam is then supplied through the porous mold to heat and diffuse the adhesive film into the adjacent fabric layer and cellular foam pad for adhesively securing the two together. Vacuum pressure is then applied for removing moisture by drawing air through the perforations of the platen, the foam pad, the fabric layer and porous mold.

One drawback to methods for making fabric covered foam articles like that disclosed in Kozlowski '199, is that a portion of the completed article is not covered by the decorative fabric layer; that is, only the front and side portions of the article are fabric covered, leaving a backside surface uncovered. Thus, such methods are limited to applications wherein a backside surface of the article is not viewable. Typically, fasteners such as clasps or hooks are used to secure the fabric layer to such backside surfaces. If the backside surface of an article is viewable, a rigid plastic back panel may be secured to the backside of the article in order to hide the uncovered back portion from view. Unfortunately, decorative plastic cover panels and other remedial measures for covering the backside portions of articles made from this method significantly increase the cost of the article.

Reversible fabric bag techniques provide an attractive and inexpensive alternative to making fabric covered foam articles which overcome many of the deficiencies associated with prior art methods. The reversible fabric bag method generally includes utilizing a fabric layer in the shape of a bag. The fabric bag is reversed inside out and a portion of the inside of the fabric bag is adhesively bonded to a pre-formed foam pad. Once the foam pad is bonded to the inside of the fabric bag, the fabric bag is turned right side out so as to enclose the foam pad therein. The resulting article provides an attractive fabric cover about the rear, side and front portions of the foam, thus avoiding the need for expensive decorative cover panels. Examples of reversible bag methods are shown in U.S. Patent Nos. 6,500,805 to Lowe, 4,925,513 to Witzke, 4,740,260 to Selbert and 4,715,916 to Shimada.

Unfortunately, such reversible fabric bag methods are limited to applications wherein a fabric bag may be reversed. In other words, if the fabric bag may not be turned inside out, the reversible bag methods are not useful. For example, if the fabric bag material is unflexible or if the foam back includes a rigid portion such as a rigid frame encased therein, the fabric bag may not be capable of being reversed about the foam pad adhered to an inner portion thereof. In these situations, the aforementioned expensive remedial measures must be used e.g., expensive decorative plastic back panels. Other remedial measures which may be used include the use of zippers and VELCRO™ to secure fabric covering to the backside surface of the article. Unfortunately, all of these remedial measures significantly increase the cost of making such articles.

### SUMMARY OF THE INVENTION AND ADVANTAGES

The present invention is directed toward a method for making a cushion with a pre-formed foam pad enclosed within a fabric bag. The subject method comprises the steps of: inserting a pre-formed foam pad within a fabric bag so that the foam pad is enclosed within the fabric bag, sandwiching an adhesive film which bonds in response to heat between a portion of the inside of the fabric bag and a portion of the outside of the foam pad, and heating the adhesive film to activate the adhesive and form a bond between the fabric bag and the foam pad. The subject method is characterized by the step of pre-attaching, localized partial melting or sewing, the adhesive film to one of the portions prior to inserting the foam pad within the fabric bag.

An advantage of pre-attaching the adhesive film to one of the portions prior to inserting the fabric bag within the fabric bag is realized by the adhesive film remaining at the proper position, sandwiched between the foam pad and the fabric bag, while the foam pad is inserted and positioned within the fabric bag. Other particular embodiments of the invention are set out in dependent claims 3-12.

### BRIEF DESCRIPTION OF THE DRAWINGS

Other advantages of the present invention will be readily appreciated as the same becomes better understood by reference to the following detailed description when considered in connection with the accompanying drawings wherein:
FIGURE 1 is a perspective view showing the foam pad, adhesive film, and fabric bag;
FIGURE 2 is a perspective view of an apparatus used in the preferred embodiment of the subject method; and
FIGURE 3 is a perspective view of the apparatus with the fabric bag and foam pad positioned upon a mold.

### DETAILED DESCRIPTION OF THE PREFERRED EMBODIMENT

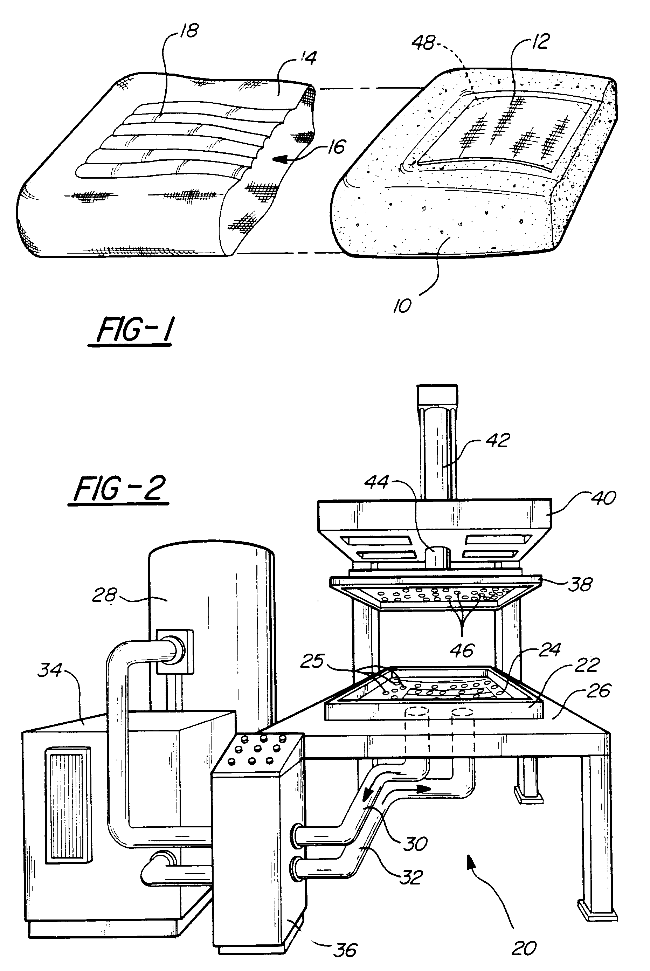

Referring now to the drawings wherein like numerals indicate like corresponding parts throughout the several views, the individual components of the subject fabric cover foam cushion are shown in Figure 1. The subject cushion includes a pre-formed foam pad 10. The foam pad 10 may be made from a variety of commonly known foam materials including polyurethane. The foam pad 10 is preformed into a desired shape and contour by common foam forming techniques such as carving the desired foam shape out of a foam block or pouring foaming materials into specifically designed molds in order to form the desired shape.

An adhesive film 12 is shown pre-attached to a portion of the foam pad 10. The film 12 is a thin sheet having a thickness between 0,0063 mm to 0,25 mm (1/4 to 10 mills) thick, but preferably between 0,025 mm to 0,032 mm (1 to 1 1/4 mills) thick. The film 12 is of the heat activated type so that the film 12 remains non-tacky, even slippery to the touch, until heated. Upon heating, however, the film 12 forms and adhesive bonding material. Such heat activated films are well known in the art and they include polyamide films which are hydrophilic or, alternatively, may include polyester films which are activated by hot air. Two specific films have been found to work particularly well. The first is PT213, sold by Bemis, contactable at P.O. Box 314, Watertown, Massachusetts 02272. The second film is H1, sold by Autocem of 3 Parkway, Philadelphia, Pennsylvania 19102.

A fabric bag is shown at 14. The fabric bag 14 includes an opening 16 for inserting the foam pad 10 and the adhesive film 12 therein. The adhesive film 12 may be pre-attached to an inside portion of the fabric bag by inserting adhesive film 12 within the opening 16 and subsequently attaching the film 12 to a portion of the inside of the bag 14 prior to inserting the foam pad 10 therein. The fabric bag 14 may comprise any one of many fabrics currently utilized as decorative layers for upholstering seats in automotive vehicles. Preferably, a "breathable" fabric is chosen which allows air and moisture to pass therethrough. Examples of commonly known materials which may be used in the subject method include woven, knits and laminates. Such fabrics generally include fibers consisting of nylon and polyester materials but may include natural fibers such as cotton. The fabric bag 14 may include surface effects, designs or other detailing thereon. For example, Figure 1 shows a portion of the fabric bag including a raised foam section 18 having individually raised foam pockets attached to the outside of the fabric bag 14. Such foam sections may comprise pockets of foam encased in fabric covering and secured to an outer portion of the fabric bag 14.

Turning to Figure 2, an apparatus for making the subject cushion assembly is generally shown at 20. The apparatus 20 includes a mold 22. The mold 22 includes an upper surface 24 having passages 25 therein for allowing fluid to pass therethrough. The contour of the mold surface 24 corresponds to the desired shape of one side of the finished cushion, preferably the front side of the finished cushion. The mold 22 may be supported upon a base or table 26 so that the mold 22 may be easily removed from the table 26 and replaced with another mold. A vacuum pump (not shown) and tank 28 supply vacuum pressure to the mold surface 24 by way of a vacuum line 30 or conduit interconnected therebetween. More specifically, vacuum pressure is supplied to the mold surface 24 through the passages 25 in the mold surface. The vacuum line 28 may be directly connected to the mold 22 through an aperture, not shown, in the table 26. Alternatively, the vacuum line may be connected to a pressure tank (not shown) located immediately below the mold 22 and the table 26. In this alternative embodiment, the mold 22 may include sealing extensions (not shown) for sealably interconnecting with the pressure tank.

A heat source 34, preferably a steam generator, supplies heat through a heat line 32 or conduit to the mold surface 24 in a manner similar to that described regarding the vacuum pressure. Depending upon the specific adhesive film being used, the heat supplied may be heated air or steam. The heated fluid is supplied to the mold surface 24 via the passages 25 therein. The heat line 32 may be directly interconnected with the mold 22 through an aperture (not shown) in the table 26 or, alternatively, may be connected to the pressure tank (which may or may not be the same pressure tank utilized for the vacuum operation). In the alternative embodiment, the mold 22 may include sealable extensions (not shown) for interconnecting the mold 22 with the pressure tank.

The heat and vacuum lines 32,30 preferably pass through a control means 36 for controlling the flow of heated fluid and vacuum pressure to the mold surface 24. The control means may include any commonly known means for controlling fluid flow through conduits. For example, simple manual valve shutoffs may be utilized or complex computer controlled valve controls may be used. In the latter case, computer programs can be utilized to optimize vacuum pressure flow and heat fluid flow. The computer controlled systems may employ thermocouples at various positions, such as the mold surface 24, for measuring and controlling heating operations. Additionally, the computer control system may be programmed to sequence vacuum and heating steps relative to one another. Such computer controlled and manually controlled systems are well known in the art.

An upper platen 38 is provided for compressing the fabric bag 14, foam pad 10 and adhesive film 12 against the mold surface 24. The platen 38 is suspended from a support structure 40. A pneumatic or hydraulic cylinder 42 includes a rod 44 for moving the platen 38 vertically in relation to the mold 22. The platen 38 preferably includes perforations or passages 46 extending therethrough for allowing the flow of air therethrough. The vertical position of the platen 38 may be controlled manually or may be controlled by a control means such as that previously described i.e., the same or similar computer control means may be used for controlling both the vertical position of the upper platen 38 and for controlling the heating and vacuum operations.

The subject method for making fabric covered foam cushions will now be discussed. In accordance with the subject method, the adhesive film 12 is pre-attached to the foam pad 10 by preferably heating localized areas 48 of the film 12 until they begin to exhibit adhesive properties i.e., become tacky. This may be accomplished by heating the four corners of the film 12 with a hair dryer. While tacky, the localized areas are pressed against the foam pad 10. Upon slight cooling, the previously tacky portions of the film 14 form a bond with the foam pad 10, thus securing the film 12 to the foam pad 10. Alternatively, the film 12 may be sewn to the foam pad 10 or otherwise secured thereto.

Alternatively, the adhesive film 12 may be inserted inside the fabric bag 14 and pre-attached to a portion of the inside of the fabric bag 14 in the same manner as described with regard to the foam pad 10 i.e., localized partial melting, sewing, etc.

The adhesive film 12 is preferably pre-attached to a portion of the foam pad 10 or fabric bag 14 in an area where bonding between the bag 14 and foam pad 10 is particularly critical. For example, when making an automobile seat, it is particularly important to bond the foam pad 10 to the fabric bag 14 in areas that are in contact with an occupant. Accordingly, the adhesive film 12 is pre-attached to a portion of either the foam pad 10 or fabric bag 14 which will be in contact with the occupant seated upon the foam seat.

After pre-attaching the adhesive film 12, the foam pad 10 is inserted into the fabric bag 14. If the fabric bag 14 has a particular configuration, the foam pad 10 must be arranged within the bag 14 so that the seated or front side of the foam pad corresponds to the seated or front side of the fabric bag 14.

Due to the fact that the adhesive film 12 is pre-attached to either the foam pad 10 or fabric bag 14, the foam pad 10 may be inserted and arranged about within the fabric bag 14 without moving the adhesive film 12 from its proper position, sandwiched between the foam pad 10 and fabric bag 14 at the precise location at which bonding is desired. Moreover, the adhesive film 12 resists wrinkling due to the pre-attachment step.

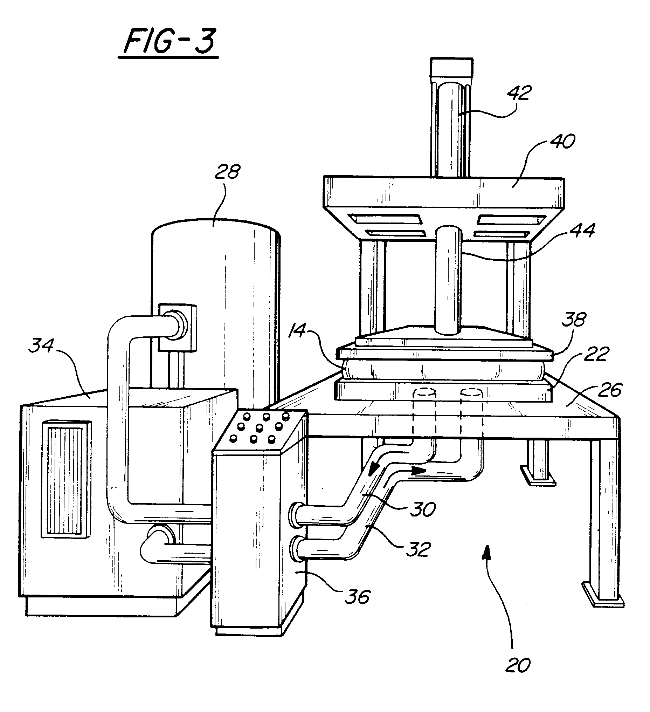

Once the foam pad 10 and the adhesive film 12 have been properly positioned within the fabric bag 14, the fabric bag 14 is positioned upon the mold surface 24, as shown in Figure 3. Ideally, the configuration of the mold surface 24 closely corresponds to at least one side of the pre-formed foam pad 10. If such is the case, the fabric bag 14 is positioned upon the mold surface 24 so that the contours of the foam pad 10 enclosed within the bag 14, are located in corresponding relationship with the mold surface 24.

Once positioned upon a mold surface 24, vacuum pressure may be supplied at the mold surface 24 through the passages 25 therein. The vacuum pressure is created by the vacuum pump (not shown) and is communicated to the mold surface by way of the vacuum line 30. Vacuum pressure may be utilized when using adhesive films which are air impervious. Such films are common in the art and generally are rendered air impervious i.e., breathable, by dissolving and activating the film with heat or steam. Accordingly, when using such an air impervious film, vacuum pressure may be utilized to urge the adhesive film 12 into close contact with portions of the inside of the fabric bag 14. It is noted, however, that the vacuum pressure is not necessary for adequately bonding between the foam pad 10 and fabric bag 14. Depending upon the specific fabrics being used, vacuum pressure may not assist in drawing the adhesive film 12 into close contact with the fabric bag 14. For example, fabric bags made from elastic-type materials may be stretched in order to insert the foam pad therein. In such cases, the elastic nature of the fabric maintains the fabric bag in close contact with the adhesive film.

Regardless of whether vacuum pressure is utilized, the upper platen 38 is subsequently moved downward to compress the fabric bag 14, foam pad 10 and adhesive film 12 against the mold surface 24. If vacuum pressure is utilized, it is discontinued once the platen 38 is lowered against the fabric bag 14. While the fabric bag 14 and the pad 10 remain compressed against the mold surface 24, heated fluid, preferably steam, is forced through the passage 25 in the mold surface 24 to penetrate the fabric bag 14 and dissolve and activate the adhesive film 12 into a pervious bond between the fabric bag 14 and foam pad 10. After a brief exposure to steam, the steam flow is discontinued by way of the control means 36. Subsequently, while the fabric bag 14 and foam pad 10 remain compressed against the mold surface 24, vacuum pressure may be provided through the passages 25 of the mold surface 24 by way of the vacuum line 30, in order to remove residual moisture from the fabric bag 14. It is noted, however, that this application of vacuum pressure to remove moisture is not required and is only utilized to decrease the time necessary for finishing the cushion assembly. By utilizing vacuum pressure, not only is residual moisture removed from the cushion, but cool air is drawn through the fabric 14 and foam pad 10 in order to cool the cushion and cure the adhesive film 12 to a pervious bond between the fabric bag 14 and foam pad 10.

The invention has been described in an illustrative manner, and it is to be understood that the terminology which has been used is intended to be in the nature of words of description rather than of limitation.

Obviously, many modifications and variations of the present invention are possible in light of the above teachings. It is, therefore, to be understood that within the scope of the appended claims wherein reference numerals are merely for convenience and are not to be in any way limiting, the invention may be practiced otherwise than as specifically described.

## Claims

1. A method for making a cushion with a preformed foam pad enclosed within a fabric bag, the method comprises the steps of:
inserting a pre-formed foam pad (10) within a fabric bag (14) so that the foam pad (10) is enclosed within the fabric bag (14);
sandwiching an adhesive film (12) which bonds in response to heat between a portion of the inside of the fabric bag (14) and a portion of the outside of the foam pad (10);
heating the adhesive film (12) to activate the adhesive and form a bond between the fabric bag (14) and the foam pad (10);
said method characterized by the step of partially melting sections of the adhesive film (12) to form a bond with one of the portions prior to inserting the foam pad (10) within the fabric bag (14) so that the adhesive film (12) remains at the proper position sandwiched between the foam pad (10) and the fabric bag (14) while the foam pad (10) is inserted and positioned within the fabric bag (14).

2. A method for making a cushion with a pre-formed foam pad enclosed within a fabric bag, the method comprises the steps of:
inserting a pre-formed foam pad (10) within a fabric bag (14) so that the foam pad (10) is enclosed within the fabric bag (14);
sandwiching an adhesive film (12) which bonds in response to heat between a portion of the inside of the fabric bag (14) and a portion of the outside of the foam pad (10);
heating the adhesive film (12) to activate the adhesive and form a bond between the fabric bag (14) and the foam pad (10);
said method characterized by the step of sewing sections of the adhesive film (12) to one of the portions prior to inserting the foam pad (10) within the fabric bag (14) so that the adhesive film (12) remains at the proper position sandwiched between the foam pad (10) and the fabric bag (14) while the foam pad (10) is inserted and positioned within the fabric bag (14).

3. A method as set forth in either claim 1 or 2 further characterized by placing the fabric bag (14), including the foam pad (10) and adhesive film (12) located therein, upon a surface (24) of a mold (22).

4. A method as set forth in claim 3 further characterized by the adhesive film (12) being air impervious until heated and thereafter diffusing into a pervious bond between a portion of the inside of the fabric bag (14) and a portion of the outside of the foam pad (10).

5. A method as set forth in claim 4 further characterized by drawing vacuum pressure through the surface (24) of the mold (22) to urge the adhesive film (12) into contact with a portion of the inside of the fabric bag (14).

6. A method as set forth in claim 3 further characterized by passing hot fluid through the surface (24) of the mold (22) to activate the adhesive film (12).

7. A method as set forth in claim 6 further characterized by the hot fluid including steam.

8. A method as set forth in claim 6 further characterized by drawing vacuum pressure through the surface (24) of the mold (22) after passing hot fluid therethrough in order to draw residual fluid from the fabric covered foam pad (10).

9. A method as set forth in claim 3 further characterized by compressing the foam pad (10), adhesive film (12), and fabric bag (14) against the mold surface (24).

10. A method as set forth in claim 9 further characterized by the step of compressing including urging a platen (38) toward the surface (24) of the mold (22) to sandwich the fabric bag (14) between the platen (38) and the mold (22).

11. A method as set forth in claim 10 further characterized by passing hot fluid through the surface (24) of the mold (22) while the fabric bag (14) is compressed against the surface (24).

12. A method as set forth in claim 11 further characterized by drawing vacuum pressure through the surface (24) of the mold (22) after passing hot fluid through the surface (24) and while the fabric bag (14) is compressed against the surface (24) to draw residual fluid from the fabric covered foam pad (10).

## Patentansprüche

1. Verfahren zum Herstellen eines Kissens mit einem vorgeformten Schaumpolster, das innerhalb eines Gewebebeutels eingeschlossen ist, wobei das Verfahren die Stufen umfaßt:
Einfügen eines vorgeformten Schaumpolsters (10) in einen Gewebebeutel (14), sodaß das Schaumpolster (10) innerhalb des Gewebebeutels (14) eingeschlossen ist;
Aufeinanderschichten eines Klebefilms (12), der in Abhängigkeit von Wärme zwischen einem Teil der Innenseite des Gewebebeutels (14) und einem Teil der Außenseite des Schaumpolsters (10) verbindet;
Erwärmen des Klebefilms (12) für eine Aktivierung des Klebstoffs und die Ausbildung einer Verbindung zwischen dem Gewebebeutel (14) und dem Schaumpolster (10);
wobei das Verfahren gekennzeichnet ist durch die Stufe eines teilweisen Schmelzens von Bereichen des Klebefilms (12) für die Ausbildung einer Verbindung mit einem der Teile vor dem Einfügen des Schaumpolsters (10) in den Gewebebeutel (14), sodaß der Klebefilm (12) in der passenden Position mit einer Schichtung zwischen dem Schaumpolster (10) und dem Gewebebeutel (14) verbleibt, während das Schaumpolster (10) in den Gewebebeutel (14) eingefügt und darin positioniert wird.

2. Verfahren zum Herstellen eines Kissens mit einem vorgeformten Schaumpolster, das innerhalb eines Gewebebeutels eingeschlossen ist, wobei das Verfahren die Stufen umfaßt:
Einfügen eines vorgeformten Schaumpolsters (10) in einen Gewebebeutel (14), sodaß das Schaumpolster (10) innerhalb des Gewebebeutels (14) eingeschlossen ist;
Aufeinanderschichten eines Klebefilms (12), der in Abhängigkeit von Wärme zwischen einem Teil der Innenseite des Gewebebeutels (14) und einem Teil der Außenseite des Schaumpolsters (10) verbindet;
Erwärmen des Klebefilms (12) für eine Aktivierung des Klebstoffs und die Ausbildung einer Verbindung zwischen dem Gewebebeutel (14) und dem Schaumpolster (10);
wobei das Verfahren gekennzeichnet ist durch die Stufe eines Vernähens von Bereichen des Klebefilms (12) mit einem der Teile vor dem Einfügen des Schaumpolsters (10) in den Gewebebeutel (14), sodaß der Klebefilm (12) in der passenden Position mit einer Schichtung zwischen dem Schaumpolster (10) und dem Gewebebeutel (14) verbleibt, während das Schaumpolster (10) in den Gewebebeutel (14) eingefügt und darin positioniert wird.

3. Verfahren nach einem der Ansprüche 1 oder 2, weiter gekennzeichnet durch die Anordnung des Gewebebeutels (14) unter Einschluß des Schaumpolsters (10) und des darin angeordneten Klebefilms (12) auf einer Oberfläche (24) einer Form (22).

4. Verfahren nach Anspruch 3, weiter dadurch gekennzeichnet, daß der Klebefilm (12) bis zu seiner Erwärmung gegenüber Luft undurchlässig ist und danach zu einer durchlässigen Verbindung zwischen einem Teil der Innenseite des Gewebebeutels (14) und einem Teil der Außenseite des Schaumpolsters (10) diffundiert.

5. Verfahren nach Anspruch 4, weiter dadurch gekennzeichnet, daß ein Vakuumdruck durch die Oberfläche (24) der Form (22) hindurch angelegt wird, um den Klebefilm (12) in eine Berührung mit einem Teil der Innenseite des Gewebebeutels (14) zu drücken.

6. Verfahren nach Anspruch 3, weiter dadurch gekennzeichnet, daß ein heißes Fluid durch die Oberfläche (24) der Form (22) hindurch geleitet wird, um den Klebefilm (12) zu aktivieren.

7. Verfahren nach Anspruch 6, weiter dadurch gekennzeichnet, daß das heiße Fluid einen Dampf einschließt.

8. Verfahren nach Anspruch 6, weiter dadurch gekennzeichnet, daß ein Vakuumdruck durch die Oberfläche (24) der Form (22) hindurch angelegt wird nach der Hindurchleitung von heißem Fluid, um restliches Fluid von dem mit einem Gewebe bedeckten Schaumpolster (10) abzuziehen.

9. Verfahren nach Anspruch 3, weiter dadurch gekennzeichnet, daß das Schaumpolster (10), der Klebefilm (12) und der Gewebebeutel (14) gegen die Formoberfläche (24) zusammengedrückt werden.

10. Verfahren nach Anspruch 9, weiter dadurch gekennzeichnet, daß die Stufe des Zusammendrückens das Andrücken einer Platte (38) gegen die Oberfläche (24) der Form (22) einschließt, um den Gewebebeutel (14) zwischen der Platte (38) und der Form (22) anzuordnen.

11. Verfahren nach Anspruch 10, weiter gekennzeichnet durch ein Hindurchleiten von heißem Fluid durch die Oberfläche (24) der Form (22) hindurch, während der Gewebebeutel (14) gegen die Oberfläche (24) angedrückt wird.

12. Verfahren nach Anspruch 11, weiter gekennzeichnet durch das Anlegen eines Vakuumdruckes durch die Oberfläche (24) der Form (22) hindurch, nachdem heißes Fluid durch die Oberfläche (24) hindurch geleitet ist und während der Gewebebeutel (14) gegen die Oberfläche (24) angedrückt wird, um restliches Fluid von dem mit einem Gewebe bedeckten Schaumpolster (10) abzuziehen.

## Revendications

1. Procédé pour fabriquer un coussin ayant un tampon de mousse pré-formé, renfermé dans un sac en tissu, le procédé comprenant les étapes suivantes :
insertion d'un tampon de mousse pré-formé (10) dans un sac en tissu (14), de manière que le tampon de mousse (10) soit renfermé dans le sac en tissu (14);
intercaler un film adhésif (12) qui se lie en réponse à l'application d'une chaleur entre une partie intérieure du sac en tissu (14) et une partie extérieure du tampon de mousse (10);
chauffage du film adhésif (12) pour activer l'adhésif et former une liaison entre le sac en tissu (14) et le tampon de mousse (10);
ledit procédé étant caractérisé par l'étape de mise en fusion partielle de sections du film adhésif (12) afin de former une liaison avec l'une des parties, avant d'insérer le tampon de mousse (10) dans le sac en tissu (14), de manière que le film adhésif (12) reste dans la position correcte intercalée entre le tampon de mousse (10) et le sac en tissu (14), tandis que le tampon de mousse (10) est inséré et placé dans le sac en tissu (14).

2. Procédé pour fabriquer un coussin ayant un tampon de mousse pré-formé, renfermé dans un sac en tissu, le procédé comprenant les étapes de:
insertion d'un tampon de mousse pré-formé (10) dans un sac en tissu (14), de manière que le tampon de mousse (10) soit renfermé dans le sac en tissu (14);
intercaler un film adhésif (12) qui se lie en réponse à l'application d'une chaleur entre une partie intérieure du sac en tissu (14) et une partie extérieure du tampon de mousse (10);
chauffage du film adhésif (12) pour activer l'adhésif et former une liaison entre le sac en tissu (14) et le tampon de mousse (10);
ledit procédé étant caractérisé par l'étape de couture de sections du film adhésif (12) sur l'une des parties, avant d'insérer le tampon de mousse (10) dans le sac en tissu (14), de manière que le film adhésif (12) reste dans la position correcte intercalée entre le tampon de mousse (10) et le sac en tissu (14), tandis que le tampon de mousse (10) est inséré et placé dans le sac en tissu (14).

3. Procédé selon la revendication 1 ou 2, caractérisé en outre par la mise en place du sac en tissu (14), comprenant le tampon de mousse (10) et le film adhésif (12) y étant situé, sur une surface (24) d'un moule (22).

4. Procédé selon la revendication 3, caractérise, en outre par le fait que le film adhésif (12) est imperméable à l'air, jusqu'à ce qu'il soit chauffé et est diffusé ensuite dans une liaison perméable entre une partie intérieure du sac en tissu (14) et une partie extérieure du tampon de mousse (10).

5. Procédé selon la revendication 4, caractérisé en outre par une application de dépression sous vide à travers la surface (24) du moule (22), pour pousser le film adhésif (12) à venir au contact d'une partie intérieure du sac en tissu (14).

6. Procédé selon la revendication 3, caractérisé en outre par le passage d'un fluide chaud à travers la surface (24) du moule (22), afin d'activer le film adhésif (12).

7. Procédé selon la revendication 6, caractérisé en outre par le fait que le fluide chaud comprend de la vapeur.

8. Procédé selon la revendication 6, caractérisé en outre par une application de dépression sous vide à travers la surface (24) du moule (22), après le passage d'un fluide chaud en son sein en vue d'extraire un fluide résiduel depuis le tampon de mousse (10) recouvert de tissu.

9. Procédé selon la revendication 3, caractérisé en outre par le pressage du tampon de mousse (10), du film adhésif (12) et du sac en tissu (14) contre la surface de moule (24).

10. Procédé selon la revendication 9, caractérisé en outre par l'étape de pressage comprenant le pressage d'une plaque (38) vers la surface (24) du moule (22), pour intercaler le sac en tissu (14) entre la plaque (38) et le moule (22).

11. Procédé selon la revendication 10, caractérisé en outre par le passage d'un fluide chaud à travers la surface (24) du moule (22), tandis que le sac en tissu (14) est pressé contre la surface (24).

12. Procédé selon la revendication 11, caractérisé en outre par une application de dépression sous vide à travers la surface (24) du moule (22), après le passage d'un fluide chaud à travers la surface (24) et tandis que le sac en tissu (14) est pressé contre la surface (24), pour extraire un fluide résiduel du le tampon de mousse (10) recouvert de tissu.
